# EUROPEAN PATENT APPLICATION

(11) **EP 4 108 716 A1**
(43) Date of publication of application: **28.12.2022**
(21) Application number: 21181548.5
(22) Date of filing: 24.06.2021
(51) Int. Cl.: C08K 3/34, C08K 5/00, C08K 5/098, C08K 7/06, C08L 77/02, C08L 67/02

(54) **ELECTRICALLY CONDUCTIVE COMPOSITIONS INCLUDING CARBON FIBER-FILLED SEMI-CRYSTALLINE POLYMERS**

(71) Applicant: SHPP Global Technologies B.V., 4612 PX Bergen op Zoom (NL)
(72) Inventor: SINHA, Reema, Bangalore (IN); YANG, Jian, Shanghai (CN); WAN, Xingqiu, Shanghai (CN)
(74) Representative: Dehns

(57) **Abstract**

A thermoplastic composition includes: (a) a thermoplastic polymer component including a crystalline or semi-crystalline polymer; (b) carbon fiber; (c) from about 0.01 wt% to about 10 wt% of at least one nucleating agent including a non-electrically conducting filler, an organic nucleation agent, or a combination thereof; and (d) from 0 wt% to 30 wt% of an amorphous polymer. The carbon fiber has a nominal fiber diameter of from about 3 micron (µm) to about 13 µm. The combined weight percent value of all components does not exceed 100 wt. %, and all weight percent values are based on the total weight of the thermoplastic composition.

## Description

### FIELD OF THE DISCLOSURE

The present disclosure relates to electrically conductive thermoplastic compositions, and in particular to thermoplastic compositions including carbon fiber and at least one nucleating agent including a non-electrically conducting filler or an organic nucleation agent.

### BACKGROUND OF THE DISCLOSURE

Polymers are typically reinforced with materials such as chopped carbon fibers as a reinforcing agent to form composites with improved mechanical and electrical properties. The resulting composites can be used in various applications. To further improve the electrical conductivity of carbon fiber (CF)-based composites a hybrid filler approach may be used. In such applications it is known to use a combination of CF with conductive carbon black (CCB), carbon nanotubes (CNT) and/or graphite. The conductive fillers (e.g., CCB or graphite) must be used in the composition in at least 2 wt% in combination with CF to show a significant improvement in electrical properties. Unfortunately, incorporation of these fillers with CF may reduce flow and other properties. Further, CNT are very expensive and thus not commonly used with carbon fiber.

These and other shortcomings are addressed by aspects of the present disclosure.

### SUMMARY

Aspects of the disclosure relate to a thermoplastic composition including: (a) a thermoplastic polymer component including a crystalline or semi-crystalline polymer; (b) carbon fiber; (c) from about 0.01 wt% to about 10 wt% of at least one nucleating agent including a non-electrically conducting filler, an organic nucleation agent, or a combination thereof; and (d) from 0 wt% to 30 wt% of an amorphous polymer. The carbon fiber has a nominal fiber diameter of from about 3 micron (µm) to about 13 µm. The combined weight percent value of all components does not exceed 100 wt. %, and all weight percent values are based on the total weight of the thermoplastic composition.

Further aspects of the disclosure relate to a method of making a thermoplastic composition, including:
combining, to form a mixture, a thermoplastic polymer component including a crystalline or semi-crystalline polymer, carbon fiber, from about 0.01 wt% to about 10 wt% of at least one nucleating agent including a non-electrically conducting filler, an organic nucleation agent, or a combination thereof, and from 0 wt% to 30 wt% of an amorphous polymer; and
forming the thermoplastic composition from the mixture using a process including extrusion, injection molding, compression molding, vacuum forming, or blow molding.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

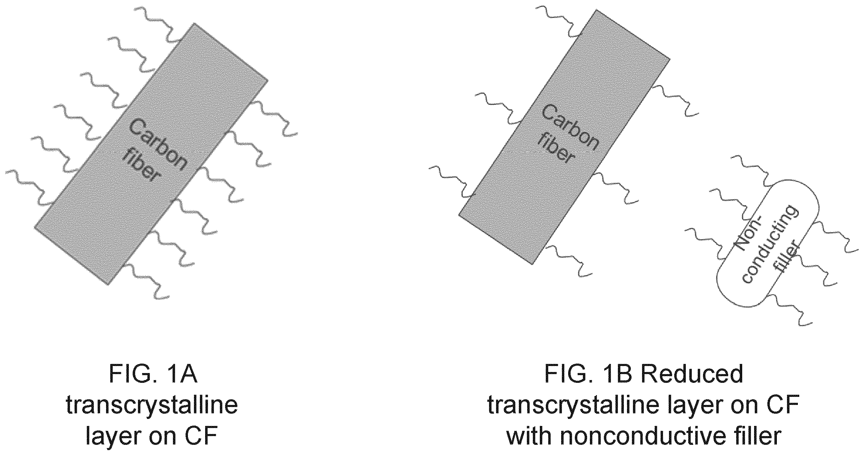

FIG. 1A is a schematic illustration of a transcrystalline layer on carbon fiber for semi-crystalline polymers-carbon fiber composites.
FIG. 1B is a schematic illustration of a reduced transcrystalline layer on carbon fiber for semi-crystalline polymers-carbon fiber composites including a non-electrically conductive filler according to aspects of the disclosure.

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a crystalline or semi-crystalline polymer" includes mixtures of two or more crystalline and/or semi-crystalline polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional amorphous polymer" means that the amorphous polymer can or cannot be included and the description includes compositions that both include and that do not include an amorphous polymer.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to thermoplastic compositions including: a thermoplastic composition including: (a) a thermoplastic polymer component including a crystalline or semi-crystalline polymer; (b) carbon fiber; (c) from about 0.01 wt% to about 10 wt% of at least one nucleating agent including a non-electrically conducting filler, an organic nucleation agent, or a combination thereof; and (d) from 0 wt% to 30 wt% of an amorphous polymer. The carbon fiber has a nominal fiber diameter of from about 3 micron (µm) to about 13 µm. The combined weight percent value of all components does not exceed 100 wt. %, and all weight percent values are based on the total weight of the thermoplastic composition.

In some aspects the crystalline or semi-crystalline polymer includes polyamide, polyester, polypropylene, copolymers thereof, or a combination thereof. Suitable polyester components include, but are not limited to, polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof. PCT is a crystalline polyester formed from cyclohexanedimethanol (CHDM) and either dimethyl terephthalate (DMT) or terephthalic acid (TPA). PETG and PCTG are copolyesters formed by including ethylene glycol (EG) in the polymerization reaction. PETG is formed if less than 50% of the diol content in the copolyester is CHDM; PCTG is formed if greater than 50% of the diol content in the copolyester is CHDM. PCTA is formed by including additional diacids such as isophthalic acid (IPA). In a particular aspect the polyester component includes PBT, PET, or a combination thereof.

In specific aspects the composition includes from about 50 wt% to about 97 wt% of the crystalline or semi-crystalline polymer.

In the present application the conventional understanding of "crystalline", "semi-crystalline" and "amorphous" polymers is used. For example, crystalline polymers are identified as having very high crystallinities (e.g., 95-99%). Crystalline polymers are rigid and have high melting temperatures. They are less affected by solvent penetration. Semi-crystalline polymers have both crystalline and amorphous regions. Semi-crystalline polymers combine the strength of crystalline polymers with the flexibility of amorphous polymers. Semi-crystalline polymers can be tough with an ability to bend without breaking. Amorphous polymers have polymer chains with branches or irregular groups that cannot pack together regularly enough to form crystals. Amorphous regions of a polymer are made up of a randomly coiled and entangled chains; they softer and have lower melting points than crystalline and semi-crystalline polymers.

The composition includes in some aspects from about 1 wt% to about 50 wt% of the carbon fiber. In further aspects the composition includes from about 1 wt% to about 20 wt%, or from about 1 wt% to about 10 wt%, of the carbon fiber. The carbon fiber has a nominal fiber diameter of from about 3 micron (µm) to about 13 µm. In certain aspects the carbon fiber has a nominal fiber diameter of from about 5 µm to about 10 µm. One purely exemplary suitable carbon fiber is the Type-65 carbon fiber available from Zoltek. This fiber has a sizing content of about 2.75% by weight, a moisture content of no greater than about 0.20% and a nominal fiber length of about 0.25 inch.

The composition includes from about 0.01 wt% to about 10 wt% of at least one nucleating agent including a non-electrically conducting filler, an organic nucleation agent, or a combination thereof. In other aspects the composition includes from about 0.01 wt% to about 5 wt%, or from about 0.01 wt% to about 2 wt%, or from about 0.01 wt% to about 1 wt% of the at least one nucleating agent. Exemplary non-electrically conducting fillers suitable for use in aspects of the disclosure include, but are not limited to, glass beads (hollow and/or solid), glass flake, milled glass, glass fibers, talc, wollastonite, silica, mica, kaolin clay, montmorillonite clay, silica, quartz, barite, and combinations thereof. In a specific aspect the non-electrically conducting filler is talc. In certain aspects the composition includes a plurality of nucleating agents. In certain aspects the one nucleating agent includes an organic nucleation agent. Exemplary organic nucleating agents include, but are not limited to, alkali metal salts of an aliphatic or aromatic carboxylic acid, phosphorus-based acids, sulfur-based acids, epoxies, fast crystallizing polymers different from the thermoplastic polymer component, ionomers, or a combination thereof.

In crystalline and semi-crystalline polymer compositions including carbon fiber, the carbon fiber acts as a nucleating agent, nucleating crystallization of crystalline/semi-crystalline polymers along the fiber surface. The crystalline layer of polymer formed on the carbon fiber is called transcrystallinity and the nucleation density varies from polymer to polymer. Transcrystallinity on carbon fiber is illustrated in FIG. 1A. If the nucleation density is high/thick enough, it could reduce the electrical properties of the carbon fiber. This is because the polymer layer formed on carbon fiber is non-conductive and can reduce the overall conductivity of the carbon fiber. This can prevent the composition from achieving the full potential of electrical properties.

In contrast, it was discovered in aspects of the present disclosure that inclusion of a nucleating agent such as a non-electrically conducting filler to the polymer/carbon fiber composition provides a competing nucleating agent which reduces the nucleation of the carbon fiber. Carbon fiber with reduced transcrystallinity is illustrated in FIG. IB. Even a small amount of a non-electrically conducting filler functions as a good nucleating agent, thus reducing transcrystallinity on the carbon fiber. The overall result is an improvement in the electrical conductivity of the composition.

The composition includes in some aspects greater than 0 wt% to about 30 wt% of the amorphous polymer. In other aspects the composition includes from 0.1 wt% to about 30 wt%, or from about 0.5 wt% to about 30 wt%, or from about 1 wt% to about 30 wt% of the amorphous polymer. Exemplary amorphous polymers include, but are not limited to, acrylonitrile butadiene styrene (ABS), polystyrene, polycarbonate, polysulfone, and polyetherimide.

The composition includes at least one additional additive in some aspects. The at least one additional additive may include, but is not limited to, an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an impact modifier, a blowing agent, a reinforcing agent, or a combination thereof. The at least one additional additive may be included in the thermoplastic composition in any amount that will not significantly adversely affect the desired properties of the composition.

In specific aspects the composition includes less than 2 wt% of an additional electrically conductive filler component other than the carbon fiber. As described herein, use of the non-electrically conducting filler in combination with the carbon fibers allows the described compositions to have high electrical conductivity properties without the use of an additional electrically conductive filler component. In certain aspects the composition does not include any additional electrically conductive filler component other than the carbon fiber. Exemplary electrically conductive filler components include, but are not limited to, conductive carbon black, graphene and carbon nanotubes.

In some aspects the composition has a surface resistivity that is at least one order of magnitude lower than that of a substantially identical reference composition that does not include the at least one nucleating agent. Surface resistivity may be determined in accordance with ASTM D257.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

In particular aspects a method of making a thermoplastic composition includes:
combining, to form a mixture, a thermoplastic polymer component including a crystalline or semi-crystalline polymer, carbon fiber, from about 0.01 wt% to about 10 wt% of at least one nucleating agent including a non-electrically conducting filler, an organic nucleating agent, or a combination thereof, and from 0 wt% to 30 wt% of an amorphous polymer; and
forming the thermoplastic composition from the mixture using a process including extrusion, injection molding, compression molding, vacuum forming, or blow molding. The carbon fiber has a nominal fiber diameter of from about 3 micron (µm) to about 13 µm. The combined weight percent value of all components does not exceed 100 wt. %, and all weight percent values are based on the total weight of the thermoplastic composition.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In particular aspects the article is a component for an automotive application, a business machine application, or an electrical or electronics (including consumer electronics) application. In a further aspect, the article is extrusion molded. In a still further aspect, the article is injection molded.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.
Aspect 1. A thermoplastic composition comprising:
   (a) a thermoplastic polymer component comprising a crystalline or semi-crystalline polymer;
   (b) carbon fiber;
   (c) from about 0.01 wt% to about 10 wt% of at least one nucleating agent comprising a non-electrically conducting filler, an organic nucleating agent, or a combination thereof; and
   (d) from 0 wt% to 30 wt% of an amorphous polymer,
   wherein the carbon fiber has a nominal fiber diameter of from about 3 micron (µm) to about 13 µm, and wherein the combined weight percent value of all components does not exceed 100 wt. %, and all weight percent values are based on the total weight of the thermoplastic composition.
Aspect 2. The thermoplastic composition according to Aspect 1, wherein the crystalline or semi-crystalline polymer comprises polyamide, polyester, polypropylene, copolymers thereof, or a combination thereof.
Aspect 3. The thermoplastic composition according to Aspect 1 or 2, wherein the crystalline or semi-crystalline polymer comprises polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof.
Aspect 4. The thermoplastic composition according to any of Aspects 1 to 3, wherein the composition comprises from about 50 wt% to about 97 wt% of the crystalline or semi-crystalline polymer.
Aspect 5. The thermoplastic composition according to any of Aspects 1 to 4, wherein the composition comprises from about 1 wt% to about 50 wt% of the carbon fiber.
Aspect 6. The thermoplastic composition according to any of Aspects 1 to 5, wherein the composition comprises a non-electrically conducting filler comprising glass beads, glass flake, milled glass, glass fibers, talc, wollastonite, silica, mica, kaolin clay, montmorillonite clay, silica, quartz, barite, or a combination thereof.
Aspect 7. The thermoplastic composition according to Aspect 6, wherein the non-electrically conducting filler comprises talc.
Aspect 8. The thermoplastic composition according to any of claims 1 to 7, wherein the composition comprises an organic nucleating agent comprising an alkali metal salt of an aliphatic or aromatic carboxylic acid, a phosphorus-based acid, a sulfur-based acid, an epoxy, a fast crystallizing polymer different from the thermoplastic polymer component, an ionomer, or a combination thereof.
Aspect 9. The thermoplastic composition according to any of Aspects 1 to 8, wherein the composition comprises a plurality of nucleating agents.
Aspect 10. The thermoplastic composition according to any of Aspects 1 to 9, wherein the composition comprises from greater than 0 wt% to about 30 wt% of the amorphous polymer.
Aspect 11. The thermoplastic composition according to any of Aspects 1 to 10, wherein the composition comprises at least one additional additive.
Aspect 12. The thermoplastic composition according to Aspect 11, wherein the at least one additional additive comprises an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an impact modifier, a blowing agent, a reinforcing agent, or a combination thereof.
Aspect 13. The thermoplastic composition according to any of Aspects 1 to 12, wherein the composition does not comprise an electrically conductive filler component other than the carbon fiber.
Aspect 14. The thermoplastic composition according to any of Aspects 1 to 13, wherein the composition has a surface resistivity that is at least one order of magnitude lower than that of a substantially identical reference composition that does not include the at least one nucleating agent.
Aspect 15. An article comprising the thermoplastic composition according to any of Aspects 1 to 14.
Aspect 16. The article of Aspect 15, wherein the article comprises a component for an automotive application, a business machine application, or an electrical or electronics application.
Aspect 17. A method of making a thermoplastic composition, comprising:
   combining, to form a mixture, a thermoplastic polymer component comprising a crystalline or semi-crystalline polymer, carbon fiber, from about 0.01 wt% to about 10 wt% of at least one nucleating agent comprising a non-electrically conducting filler, an organic nucleating agent, or a combination thereof, and from 0 wt% to 30 wt% of an amorphous polymer; and
   forming the thermoplastic composition from the mixture using a process comprising extrusion, injection molding, compression molding, vacuum forming, or blow molding,
   wherein the carbon fiber has a nominal fiber diameter of from about 3 micron (µm) to about 13 µm, and
   wherein the combined weight percent value of all components does not exceed 100 wt. %, and all weight percent values are based on the total weight of the thermoplastic composition.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Components used in the comparative and example compositions are listed in Table 1:

**Table 1 - Components Used**

| **Component** | **Description** |
|---|---|
| PA6 | Nylon (polyamide) 6, Radilon^{®} S27 (Radici) |
| CF | Carbon fiber, Zoltek-65 (Zoltek) |
| Talc | Talc, Jetfine^{®} 3CA (Imerys) |
| CCB | Conductive carbon black, ENSACO^{®} 250G (Imerys) |

Compositions including polyamide and carbon fiber were prepared and tested according to Table 2. Comparative composition C1 did not include an additional nucleating agent (talc). Example compositions Ex1 and Ex2 included talc:

**Table 2 - Comparative and Example Compositions and Properties**

| **Components (wt%)** | | **C1** | **Ex1** | **Ex2** |
|---|---|---|---|---|
| PA6 | | 90 | 89.5 | 89.0 |
| CF | | 10 | 10 | 10 |
| Talc | | - | 0.5 | 1.0 |
| CCB | | | | |
| Total: | | 100 | 100 | 100 |
| | | | | |

| **Properties** | | | | |
|---|---|---|---|---|
| Tensile Modulus (TM), 5 mm/min | GPa | 8.3 | 9.05 | 8.3 |
| Tensile Strength (TS) @ Break | MPa | 129.0 | 132.4 | 125 |
| Tensile Elongation @ Break | % | 4.3 | 4.1 | 4.0 |
| Flexural Modulus (FM), 1.27 mm/min | GPa | 6.6 | 6.45 | 6.1 |
| Flexural Strength @ Break | MPa | 191.0 | 189.4 | 181.3 |
| Unnotched Izod Impact (UNI), 23 °C | J/m | 657.0 | 540.4 | 424 |
| Notched Izod Impact (NII), 23 °C | J/m | 56.6 | 57.9 | 35 |
| Surface Resistivity (SR) | Ohms | 2.17E+8 | 6.17E+6 | 7.49E+5 |
| Log SR | Ohms | 8.34 | 6.79 | 5.87 |
| Melt Volume Rate (MVR), 235 °C, 5 kg | cc/ 10min | 23 | 21.12 | 27.5 |
| Heat Distortion Temp (HDT), 1.8 MPa, 3.2 mm, edgewise | °C | 197.5 | 199.3 | 200 |
| Specific Gravity (SG) | | 1.166 | 1.1735 | 1.1801 |
| Melt temp (Tm), DSC, °C | | 220 | 220 | 219 |
| Crystallization Temp (Tc), DSC, °C | | 190 | 194 | 194 |
| Crystallinity, DSC | % | 31.65 | 33.56 | 30.0 |
| TGA - residue 800 °C, N2 | % | 9.3 | 10.1 | 10.1 |

Additional comparative compositions including conductive carbon black (CCB) were prepared and tested as shown in Table 3:

**Table 3 - Comparative Compositions and Properties**

| **Components (wt%)** | | **C2** | **C3** | **C4** |
|---|---|---|---|---|
| PA6 | | 87 | 85 | 83 |
| CF | | 10 | 10 | 10 |
| Talc | | - | - | - |
| CCB | | 3 | 5 | 7 |
| Total: | | 100 | 100 | 100 |
| | | | | |

| **Properties** | | | | |
|---|---|---|---|---|
| Tensile Modulus (TM), 5 mm/min | GPa | 8.2 | 8.55 | 8.85 |
| Tensile Strength (TS) @ Break | MPa | 134 | 134.1 | 134.3 |
| Tensile Elongation @ Break | % | 4.2 | 4.06 | 3.94 |
| Flexural Modulus (FM), 1.27 mm/min | GPa | 6.3 | 6.4 | 6.57 |
| Flexural Strength @ Break | MPa | 193 | 190 | 192 |
| Unnotched Izod Impact (UNI), 23 °C | J/m | 420 | 399 | 360 |
| Notched Izod Impact (NII), 23 °C | J/m | 41.7 | 38.5 | 37.2 |
| Surface Resistivity (SR) | Ohms | 7.06E+6 | 5.06E+06 | 2.82E+06 |
| Log SR | Ohms | 6.85 | 6.70 | 6.45 |
| Melt Volume Rate (MVR), 235 °C, 5 kg | cc/ 10min | 20.63 | 18.3 | 16.6 |
| Heat Distortion Temp (HDT), 1.8 MPa, 3.2 mm, edgewise | °C | 200.6 | 202.4 | 202.9 |
| Specific Gravity (SG) | | 1.184 | 1.192 | 1.198 |
| Melt temp (Tm), DSC, °C | | 220 | 220 | 220 |
| Crystallization Temp (Tc), DSC, °C | | 195 | 196 | 196 |
| Crystallinity, DSC | % | 32.68 | 33.68 | 34.03 |
| TGA - residue 800 °C, N2 | % | 12.2 | 14.1 | 15.9 |

Tensile modulus, tensile strength and tensile elongation at break were tested in accordance with ASTM D638. Flexural modulus and flexural stress at break were determined in accordance with ASTM D790. Unnotched and notched Izod impact strength were determined in accordance with ASTM D256. Surface resistivity was determined in accordance with ASTM D257. MVR was determined in accordance with ISO 1133-1:2011. HDT was determined in accordance with ASTM D648. SG was determined in accordance with ASTM D792. Tm, Tc and crystallinity were determined in accordance with ASTM D3418. TGA was determined in accordance with ASTM E1131.

As shown in Table 2, comparing C1 to Ex1 and Ex2, inclusion of up to 1 wt% talc shows a significant decrease in surface resistivity (i.e., an increase in electrical conductivity) from 2.17E+08 to 7.49E+05. Comparative examples in Table 3 show compositions including conductive carbon black. Comparative composition C4 including 7% CCB has a SR of 2.82E+06. It was surprising that a combination of CF with non-conducting filler at a 1% loading could improve the electrical conductivity better than the conventional combination of CF with conducting filler CCB at a 7% loading. This result well-establishes that a combination of CF with a nucleating agent such as a non-conducting filler can help in reducing the trans-crystallinity on the CF and help in improving the electrical conductivity of semi-crystalline polymers-CF composites. For composites of semi-crystalline polymers and CF, tuning of transcrystallinity on carbon fiber substantially can result in substantially improved electrical properties rather than increased overall crystallinity as shown in Tables 2 and 3.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
(a) a thermoplastic polymer component comprising a crystalline or semi-crystalline polymer;
(b) carbon fiber;
(c) from about 0.01 wt% to about 10 wt% of at least one nucleating agent comprising a non-electrically conducting filler, an organic nucleation agent, or a combination thereof; and
(d) from 0 wt% to 30 wt% of an amorphous polymer,
wherein the carbon fiber has a nominal fiber diameter of from about 3 micron (µm) to about 13 µm, and
wherein the combined weight percent value of all components does not exceed 100 wt. %, and all weight percent values are based on the total weight of the thermoplastic composition.

2. The thermoplastic composition according to claim 1, wherein the crystalline or semi-crystalline polymer comprises polyamide, polyester, polypropylene, copolymers thereof, or a combination thereof.

3. The thermoplastic composition according to claim 1 or 2, wherein the crystalline or semi-crystalline polymer comprises polybutylene terephthalate (PBT), polyethylene terephthalate (PET), poly(cyclohexylenedimethylene terephthalate) (PCT), polyethylene terephthalate glycol (PETG), polycyclohexylene dimethylene terephthalate glycol (PCTG), polycyclohexylene dimethylene terephthalate acid (PCTA), copolymers thereof, or a combination thereof.

4. The thermoplastic composition according to any of claims 1 to 3, wherein the composition comprises from about 50 wt% to about 97 wt% of the crystalline or semi-crystalline polymer.

5. The thermoplastic composition according to any of claims 1 to 4, wherein the composition comprises from about 1 wt% to about 50 wt% of the carbon fiber.

6. The thermoplastic composition according to any of claims 1 to 5, wherein the composition comprises a non-electrically conducting filler comprising glass beads, glass flake, milled glass, glass fibers, talc, wollastonite, silica, mica, kaolin clay, montmorillonite clay, silica, quartz, barite, or a combination thereof.

7. The thermoplastic composition according to claim 6, wherein the non-electrically conducting filler comprises talc.

8. The thermoplastic composition according to any of claims 1 to 7, wherein the composition comprises an organic nucleating agent comprising an alkali metal salt of an aliphatic or aromatic carboxylic acid, a phosphorus-based acid, a sulfur-based acid, an epoxy, a fast crystallizing polymer different from the thermoplastic polymer component, an ionomer, or a combination thereof.

9. The thermoplastic composition according to any of claims 1 to 8, wherein the composition comprises from greater than 0 wt% to about 30 wt% of the amorphous polymer.

10. The thermoplastic composition according to any of claims 1 to 9, wherein the composition comprises at least one additional additive.

11. The thermoplastic composition according to claim 10, wherein the at least one additional additive comprises an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an impact modifier, a blowing agent, a reinforcing agent, or a combination thereof.

12. The thermoplastic composition according to any of claims 1 to 11, wherein the composition does not comprise an electrically conductive filler component other than the carbon fiber.

13. The thermoplastic composition according to any of claims 1 to 12, wherein the composition has a surface resistivity that is at least one order of magnitude lower than that of a substantially identical reference composition that does not include the at least one nucleating agent.

14. An article comprising the thermoplastic composition according to any of claims 1 to 13, wherein the article comprises a component for an automotive application, a business machine application, or an electrical or electronics application.

15. A method of making a thermoplastic composition, comprising:
combining, to form a mixture, (a) a thermoplastic polymer component comprising a crystalline or semi-crystalline polymer, (b) carbon fiber, (c) from about 0.01 wt% to about 10 wt% of at least one nucleating agent comprising a non-electrically conducting filler, an organic nucleation agent, or a combination thereof, and (d) from 0 wt% to 30 wt% of an amorphous polymer; and
forming the thermoplastic composition from the mixture using a process comprising extrusion, injection molding, compression molding, vacuum forming, or blow molding,
wherein the carbon fiber has a nominal fiber diameter of from about 3 micron (µm) to about 13 µm, and
wherein the combined weight percent value of all components does not exceed 100 wt. %, and all weight percent values are based on the total weight of the thermoplastic composition.
